# EUROPEAN PATENT SPECIFICATION

(11) **EP 3 165 832 B1**
(45) Date of publication and mention of the grant of the patent: **19.12.2018**
(21) Application number: 16196786.4
(22) Date of filing: 02.11.2016
(51) Int. Cl.: F24D 17/00, F24D 19/10

(54) **CONTROL SYSTEM**
STEUERUNGS-SYSTEM
SYSTÈME DE COMMANDE

(30) Priority: 03.11.2015 IT UB20154948
(43) Date of publication of application: 10.05.2017
(73) Proprietor: Formisano, Massimo, 00019 Tivoli (RM) (IT)
(72) Inventor: Formisano, Massimo, 00019 Tivoli (RM) (IT)
(74) Representative: Santi, Filippo

(56) References cited:
- WO-A1-2015/121856
- DE-A1- 2 912 071
- US-A- 5 293 447
- US-A1- 2012 060 829

## Description

The present invention relates to a system for controlling an electrical connection between a solar control unit and an ignition relay to turn on a heat generator for heating sanitary water.

More particularly, the invention relates to the structure of a system of said type configured to open the electrical connection between said solar control unit and said ignition relay, depending on the intensity of the amount of solar radiation, so as to prevent said heat generator to turn on when it is not necessary.

Currently, they are known solar thermal systems capable of capturing solar energy, storing and using said solar energy to heat sanitary water.

An example of a known type solar thermal system is a forced circulation thermal solar system.

The forced circulation thermal solar system comprises thermal solar panels or solar collectors. There are tubes arranged inside said solar collectors and an amount of water (so-called technical water) flows within said tubes and is heated when exposed to the sun.

Furthermore, said forced circulation thermal solar plant further comprises a solar control unit that measures the temperature of said amount of water in the solar collectors and the temperature of the same amount of water when it is entered in a stratified storage tank, connected to said solar collectors. Such a stratified storage tank heats said amount of water by means of a plurality of stratification chargers in such a way that a first part of water having a first temperature is arranged in the lower part of said stratified storage tank and a second part of water having a second temperature, higher than said first temperature, is arranged in the higher part of the stratified storage tank itself.

If the temperature of the amount of water inside said solar collectors is higher than the temperature of the first part of water inside the lower part of said stratified storage tank, the solar control unit starts a circulation pump that pushes said amount of water (i.e. the water present in the solar collectors) in the lower part of said stratified storage tank in order to said first part of water is heated.

Once said first part of water is heated, said first part of water can be used to heat a house by means of a heating system or to heat a further amount of water (so called sanitary water) present within a coil, arranged inside said stratified storage tank.

During the winter period or periods of bad weather a larger amount of hot water is required. In these cases, a boiler heats the water entering the stratified storage tank through an inlet positioned at the mid-height of the stratified storage tank itself, to provide the amount of heat to the water useful to reach the desired temperature.

A disadvantage of said solar thermal system of known type is that it is not capable of distinguishing a sunny day by a cloudy day.

Only in the presence of a sufficient intensity of solar radiation, said thermal solar system produces an amount of heat and said amount of heat is stored in the stratified storage tank.

In the absence of a sufficient intensity of solar radiation, a heat generator, such as a gas boiler or a bio fuel boiler, produces a further amount of heat for heating the sanitary water or to supplement the amount of heat generated from the solar thermal system.

However, a further disadvantage is that said heat generator is turned on even when it would not be necessary, with the associated energy consumption.

A photovoltaic solar water heating system is disclosed in the patent US 5,293,447.

Said system comprising a photovoltaic array, a water heater comprising a variable resistive load, and a controller for varying either the load characteristics of the photovoltaic array or both to ensure maximum power transfer.

A further water heating system is disclosed in the patent DE 2912071.

Said system comprises a boiler comprising in turn a water tank inside an electrical heating element for heating water and a heat exchanger are arranged.

Said system has a plurlarity of collectors section, each of which is arranged on a respective branch (where such branches are parallel to each other), a plurality of collector temperature sensors, one for each collector section, a plurality of electrically controlled valves, one for each collector section and arranged on a respective branch, where said heat exchanger is connected with said collector sections and said electrically controlled valve by means of a circulation pump.

However, a disadvantage of said last two systems is that the respective structure of each of said systems is very complex.

The object of the present invention is to overcome said disadvantages, providing a control system, having a simple structure and a low cost, to control an electrical connection between a solar control unit and an ignition relay to turn on a heat generator for heating sanitary water, such as a boiler, where said control system is configured to open said electrical connection depending on the intensity of solar radiation, so as to avoid that said heat generator turns on when it is not necessary, obtaining an energy saving.

It is therefore object of the invention a control system for controlling an electrical connection between a solar control unit and an ignition relay to turn on a heat generator for heating sanitary water, in particular a boiler, where said control system comprises:
- at least one photovoltaic module configured for capturing an amount of solar radiation and generating an output voltage,
- a control unit, connected to said at least one photovoltaic module, configured to control the opening of said electrical connection between said solar control unit and said ignition relay.

In particular, said control unit comprises:
- a switching circuit comprising a control relay for controlling the opening of said electrical connection, configured to switch the state of said control relay according to a voltage depending on the intensity of the amount of the solar radiation captured by said photovoltaic module.

Furthermore, said control system can comprise a time switch programmed to enable said heat generator to be turned on/off at predetermined times, where said time switch has an input for being connected to said solar control unit and an output connected to said control unit, and said control unit is configured to switch the state of said control relay regardless of whether said time switch is programmed in such a way that said heat generator is turned on.

According to the invention, said switching circuit can comprise:
- an operational amplifier, where said operational amplifier has a first input for receiving a first voltage or reference voltage, and a second input for receiving a second voltage, where said second voltage is said voltage depending on the intensity of solar radiation captured by said photovoltaic module, and an output, and
- a transistor, where said transistor has a base connected to the output of said operational amplifier by means of a third transistor, and a collector connected to said control relay.

In particular, said second voltage can be given by the algebraic sum of a third voltage corresponding to the output voltage of said photovoltaic module and a fourth voltage across a first resistor, connected in parallel to said photovoltaic module. Said first resistor can have a resistance value chosen so that, when the intensity of solar radiation has a value equal to 1000 W/m², said second voltage is between 6 V and 7 V, and, when the intensity of solar radiation has a value of 50 W/m², said second voltage is between 1 V and 2 V.

With reference to the control relay, said control relay can comprise a coil, a first fixed contact, a second fixed contact and a first movable contact, arranged between said first fixed contact and said second fixed, where said first movable contact is able to move from a first position, in which it is connected with said first fixed contact, to a second position, in which it is connected with said second fixed contact, and vice versa.

Said control relay can be configured in such a way that, when an output voltage of said operational amplifier is such to bring into conduction said transistor, said coil is excited by the passage of electric current and said first movable contact passes from said first position to said second position, so as to open said electrical connection between said solar control unit and said ignition relay.

Advantageously, said first voltage can be a variable voltage.

It is preferable that said switching circuit comprises a trimmer to vary said reference voltage.

It is further preferable that said trimmer is a resistive trimmer.

Advantageously, said switching circuit can comprise a first light source for indicating whether said electrical connection between said solar control unit and said ignition relay is open or closed, where said first light source is connected to said control relay via a fourth resistor.

A further advantage is that said switching circuit can comprise a power supply unit and that a second light source to indicate whether said circuit switching is powered by said power supply unit, where said second light source is connected to said power supply unit via a fifth resistor.

According to the invention, said control system can comprise bypass means to bypass said control unit and said time switch, in case of malfunction of said control unit and/or of said time switch; where said bypass means have an input for receiving a signal from said solar control unit and an output for providing a signal to said ignition relay.

A further object of the present invention is to provide a solar control unit comprising within an ignition relay to turn on a heat generator and said control system.

It is further object of the invention a solar control unit comprising within an ignition relay to turn on a heat generator to for heating sanitary water, in particular a boiler, and said control system.

The present invention will be now described, for illustrative, but not limitative purposes, according to its embodiment, making particular reference to the enclosed figures, wherein:

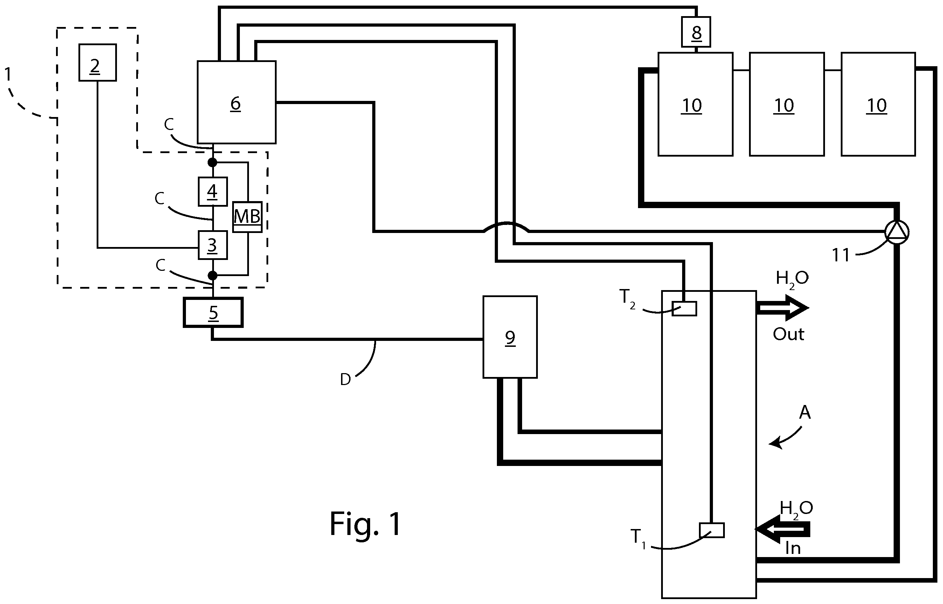

Figure 1 shows the control system, object of the invention, for controlling an electrical connection between a solar control unit and an ignition relay to turn on a boiler capable of heating an amount of sanitary water, where said solar control unit, said ignition relay and said boiler are part of a solar thermal system, of which only the part of said solar thermal system intended to heat the sanitary water of a house is schematically shown;

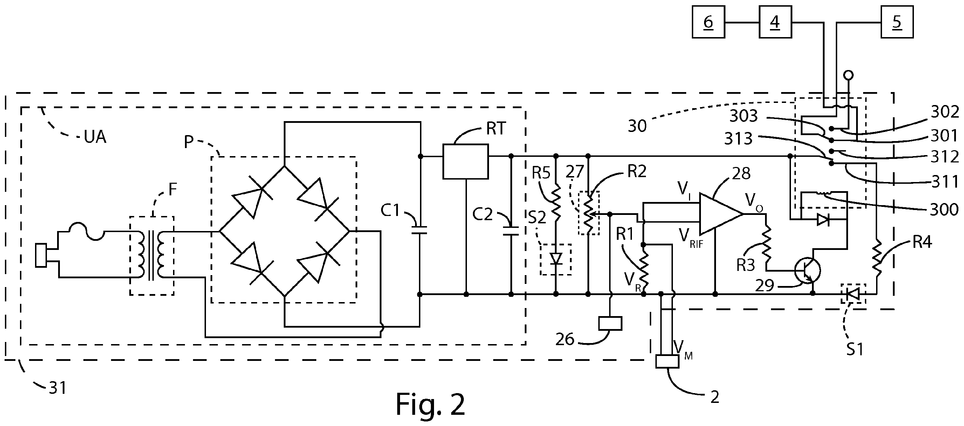

Figure 2 shows a switching circuit to switch a control relay for controlling the opening of an electrical connection between said solar control unit and said ignition relay, where said ignition relay is arranged between said solar control unit and said boiler.

With reference to Figures 1 and 2, a control system 1 for controlling an electrical connection C between a solar control unit 6 and an ignition relay 5 to turn on a boiler 9 capable of heating a quantity of sanitary water is disclosed.

In particular, the solar control unit 6 is connected to the ignition relay 5 by means of said electrical connection C and the ignition relay 5 is connected to the boiler 9 by means of a further electrical connection D.

The solar control unit 6 is configured to turn on said boiler 9 by means of said ignition relay 5.

With particular reference to Figure 1, the structure of a solar thermal system is schematically shown therein, which is intended to heat the sanitary water of a house, where the control system, object of the invention, indicated by the reference number 1, is arranged between said solar control unit 6 and said ignition relay 5.

As can be seen in Figure 1, in addition to said solar control unit 6, said ignition relay 5 and said boiler 9, said solar thermal system further comprises a plurality of thermal solar panels or solar collectors 10 and a stratified storage tank A, the latter comprising inside a plurality of stratification chargers (not shown) and a coil (not shown) inside which a quantity of sanitary water is present, heated by an amount of water (i.e. technical water) present in the stratified storage tank A.

In particular, the solar control unit 6 is connected to a temperature probe 8, the latter connected to said solar collectors 10, as well as to a first thermocouple T1, arranged in said stratified storage tank A, to a second thermocouple T2, arranged in the stratified storage tank A itself.

In particular, said stratified storage tank A comprises a first part or lower part and a second part or upper part, and said first thermocouple T1 and said second thermocouple T2 are respectively arranged in said first part and said second part.

When the temperature difference between the temperature measured by the temperature probe 8 and the temperature measured by said first thermocouple T1 is at least 10°C, the solar control unit 6 controls a circulation pump 11, connected to said thermal solar panels 10 and to said stratified storage tank A, to heat the incoming water to said stratified storage tank, so that a quantity of heat stores in it, starting from the lower part toward the upper part.

With particular reference to the control system 1 object of the invention, said control system 1 is interposed between the solar control unit 6 and the relay ignition 5, on said electrical connection C, and is configured to open said electrical connection, so as to prevent an ignition signal from said solar control unit 6 to reach said ignition relay 5 and inhibit the operation of said boiler 9.

Said control system 1 comprises:
- at least one photovoltaic module 2 configured for capturing an amount of solar radiation and generating an output voltage V_{M} depending on the captured intensity of solar radiation ,
- a control unit 3, connected to said at least one photovoltaic module 2, configured to control the opening/closing of said electrical connection C between said solar control unit 6 and said ignition relay 5 to turn on said boiler 9 in such a way that the solar control unit 6 is disconnected/connected from/to said boiler 9, depending on the value of a voltage depending on the intensity of the amount of solar radiation captured from said photovoltaic module, and
- a time switch 4 to allow said boiler 9 to be turned on/off at predetermined times, where said time switch has an input to be connected to said solar control unit 6 and an output connected to said control unit 3.

With particular reference to the electrical connection C, said electrical connection C comprises a first portion or section, by which the control unit 3 is connected to the ignition relay 5, a second portion or section, by which the control unit 3 is connected to time switch 4, and a third portion o section, by which the time switch 4 is connected to the solar control unit 6.

Said control unit 3 comprises a switching circuit 31 to switch the state of a control relay 30 for controlling the opening/closing of said electrical connection C between said solar control unit 6 and said boiler 9. In particular, as previously said, said electrical connection C comprises a first section that goes from said control unit 3 to said ignition relay 5, a second section that goes from said control unit 3 to said time switch 4 and a third section that goes from said switch time 4 to said solar control unit 6.

Said control relay 30 comprises a coil 300, a first fixed contact 301, a second fixed contact 302 and a first movable contact 303, arranged between said first fixed and said second fixed contact, capable of moving from a first position, in which it is connected with said first fixed contact 301, to a second position, in which it is connected with said second fixed contact 302, and vice versa.

When the coil 300 is not energized by the passage of electric current, said first movable contact 303 is electrically connected to said first fixed contact 301, forming a closed circuit, and is disconnected from said second fixed contact 302, forming an open circuit.

In this case, the solar control unit 6 is connected to the ignition relay 5 and can turn on the boiler 9 by means of said ignition relay.

When the coil 300 is energized by the passage of electric current, said first movable contact 303 is disconnected from said first fixed contact 301, forming an open circuit, and connects to said second fixed contact 302, forming a closed circuit.

In this case, the solar control unit 6 is no longer connected to the relay ignition 5 and the boiler 9 cannot be turned on by said ignition relay 5.

Said control unit 3 is configured to open, through said control relay 30, the electrical connection C between the solar control unit 6 and the ignition relay 5, so as to prevent the boiler 9 to be turned on from said solar control unit 6 by means of said relay ignition 5.

Said switching circuit 31 comprises, in addition to said control relay 30, the following electronic components:
- an operational amplifier 28 having a first input for receiving a first voltage or reference voltage V_{RIF}, and a second input for receiving a second voltage V_{I}, where said second voltage V_{I} is depending on the intensity of solar radiation captured by said photovoltaic module 2, and an output, and
- a transistor 29, where said transistor has a base connected to the output of said operational amplifier 28, and a collector connected to said control relay 30.

With reference to said second voltage V_{I}, said second voltage V_{I} is given by the algebraic sum of a third voltage corresponding to the output voltage V_{M} of said photovoltaic module 2 and a fourth voltage V_{R} across a first resistor R1, connected in parallel to said photovoltaic module 2.

The first resistor R1 has been inserted in the switching circuit 31 to obtain a value of the second voltage V_{I}, at the input of the operational amplifier 28, depending on the intensity of the solar radiation that reached said photovoltaic module 2.

The value of said second voltage V_{I} is variable depending on the intensity of the amount of solar radiation that is captured by said photovoltaic module. Without said first resistor R1, said second voltage V_{I} would have a value that is substantially the same (and approximately equal to the output voltage V_{M} of the photovoltaic module 2) both when it is a sunny day and when it is a cloudy day.

In particular, the output voltage V_{M} of said photovoltaic module is equal to 7,2 V when the intensity of solar radiation has a value equal to 1000 W/m² (i.e. in conditions of full sunlight) and equal to 6,9 V when the intensity of solar radiation has a value of 50 W/m² (i.e. in totally overcast weather conditions).

The first resistor R1 is chosen such that when the intensity of the solar radiation has a value equal to 1000 W/m² the second voltage V_{I} at the input of the operational amplifier is between 6V and 7V, preferably 6,5 V, and when the intensity of solar radiation has a value of 50 W/m² said second voltage is between 1 V and 2 V, preferably 1,2 V.

In the embodiment that is described, said first resistor R1 has a resistance value of 560Ω.

In the embodiment that is described, said reference voltage V_{RIF} is a variable voltage.

In particular, the value of said reference voltage V_{RIF} is adjusted by a trimmer 27.

More in particular, said trimmer 27 is a resistive trimmer and comprises a second resistor R2.

In the embodiment that is described, said second resistor R2 has a resistance value equal to 10KΩ.

Said switching circuit 31 comprises measuring means 26 for measuring the resistance value of said second resistor R2, so as to allow an operator the calibration of said resistance value.

With particular reference to the electrical connection between the operational amplifier 28 and the transistor 29, the base of said transistor 29 is connected to the output of said operational amplifier 28 by means of a third resistor R3.

In the embodiment that is described, said third resistor has a resistance value equal to 27KΩ.

When the output voltage V_{O} of the operational amplifier 28 is such as to bias the base of transistor 29, said transistor is brought into conduction and an electric current flows in the collector of the transistor itself. Consequently, the coil 300 of said control relay 30 is energized to the passage of said electric current and the first movable contact 303 of said control relay 30 disconnects from said first fixed contact 301 and connects with said second fixed contact 302, so that the electrical connection between said solar control unit 6 and said boiler 9 is open.

Hence, although it is possible to program the time switch 4 in such a way that the boiler 9 is turned off for a predetermined time period, chosen by a user, the boiler 9 may continue to be turned off beyond said predetermined time period, when the amount of solar radiation has an intensity such that the second voltage V_{I} is greater than the first voltage V_{RIF}. In fact, in this situation, the transistor 28 is brought into conduction, the coil 300 of said control relay 30 is energized by the passage of electric current and the first movable contact 303 of said control relay 20 connects to said second fixed contact 302. Said predetermined time period can be chosen by the user, based on the height of the sun on the horizon.

Consequently, the electrical connection C between the solar control unit 6 and the ignition relay 5 opens and the operation of the boiler 9 is inhibited.

When the solar radiation does not have an intensity such that the second voltage V_{I} is greater than the first voltage V_{RIF} (i.e. the second voltage V_{I} is less than the first voltage V_{RIF}), the transistor 28 is not brought into conduction, the coil 300 of said control relay 30 is not energized (in the absence of passage of electric current) and the first movable contact 303 remains connected to the first fixed contact 301.

Consequently, the solar control unit 6 is connected to the ignition relay 5 and an ignition signal can reach said ignition relay 5 to turn on the boiler 9.

In other words, in the event of a sunny day, if the second voltage V_{I} at the input to the operational amplifier 28 depending on the intensity of solar radiation that reaches said at least one photovoltaic module 2 is higher than the reference voltage V_{RIF}, the first movable contact 303 of said control relay 30 moves from the first position to the second position, so as to open the electrical connection between the solar control unit 6 and the ignition relay 5. Therefore, the solar control unit 6 is not connected to said boiler 9 by means of said ignition relay 5 and a possible ignition signal coming from said solar control unit 6 does not reach said ignition relay 5 to turn on the boiler 9.

In case of a cloudy day or if during the day the intensity of solar radiation is not sufficient to switch the control relay 30 of the switching circuit 31 (i.e. when the second voltage V_{I} at the input of the operational amplifier 28 depending on the intensity of the solar radiation that reaches said at least one photovoltaic module 2 is less than the first voltage V_{RIF}), the first movable contact 301 of said control relay 30 does not move from the first position to the second position or, if it is in the second position, it moves from the second position to the first position. Consequently, the solar control unit 6 is connected to said boiler 9 through said ignition relay 5 and an ignition signal can reach said ignition relay 5 to turn on the boiler 9.

Once that the boiler 9 is turned on, said boiler provides the required amount of heat to the sanitary water.

Moreover, said control system 1 preferably comprises bypass means MB for bypassing said control unit 3 and said time switch 4, in case of malfunction of said control unit 3 and/or of said time switch 4, so that said solar control unit 6 is connected to said ignition relay 5 by means of said bypass means MB, and the boiler 9 may be turned on by said ignition relay 5.

Said bypass means MB are interposed between said solar control unit 6 and said ignition relay 5.

In case of malfunction of said control unit 3 and/or of said time switch 4, the ignition signal from the solar control unit 6 bypasses the time switch 4 and the control unit 3 and reaches said ignition relay 5.

Furthermore, said switching circuit 3 comprises a first light source S1, connected to the control relay 30 by means of a fourth resistor R4, to indicate whether the electrical connection C between the solar control unit 6 and the ignition relay 5 is open or not open (i.e. the solar control unit 6 is connected to the boiler 9 through the ignition relay 5).

In particular, said first light source S1 is configured to be turned on when the electrical connection C between the solar control unit 6 and the ignition relay 5 is closed and turned off when said electric connection C is open.

Furthermore, said light source S1 has a first color.

Said control relay 30 further comprises a third fixed contact 311 and a fourth fixed contact 312, and a second movable contact 313, arranged between said third fixed contact 311 and said fourth fixed contact 312, capable of moving between a first position, in which it is in contact with said third fixed contact 311, to a second position, in which it is in contact with said fourth fixed contact 312, and vice versa.

When the second movable contact 313 is connected with said third fixed contact 311, means that the solar control unit 6 is connected to the ignition relay 5 and the boiler 9 can be turned on from said solar control unit 6 by means of said ignition relay. Consequently, said first light source S1 is turned on.

When the second movable contact 313 is connected with said fourth fixed contact 312, means that the solar control unit 6 is not connected with the relay ignition 5. Consequently, said first light source S1 is turned off.

The switching circuit 31 comprises a power supply unit UA and a second light source S2 to indicate that said switching circuit 31 is powered by said power supply unit UA.

In the embodiment that is described, said supply unit UA comprises a transformer F, a diode bridge P, connected to said transformer F, a voltage stabilizing device RT to stabilize the voltage at the output to said diode bridge P.

Said power supply unit UA further comprises a first capacitor C1, connected to said diode bridge P and to said voltage RT stabilizing device, and a second capacitor C2, connected to said stabilization device RT.

Said first capacitor C1 and said second capacitor C2 serve to prevent malfunction of the voltage stabilizing device RT.

Said second light source S2 is connected to said power supply unit UA by means of a fifth resistor R5. In particular, said second light source S2 has a second color, different from said first color of said first light source S1.

In the embodiment being described, each light source S1, S2 comprises a respective light emitting diode or LED.

Furthermore, said fourth resistor R4 and said fifth resistor R5 have a resistance value equal to 470KΩ.

Although in the embodiment being described, the control system, object of the invention, is interposed between a solar control unit and an ignition relay, by which the solar control unit is capable of turning on a boiler, it is possible to provide that said solar control unit comprises inside said ignition relay and said control system.

Advantageously, as already mentioned, the control system, object of the invention , allows to inhibit the operation of a heat generator for heating sanitary water, such as a boiler, depending on the intensity of the amount of solar radiation captured by at least one photovoltaic module, so as to obtain a significant energy saving. On the basis of said intensity of amount of solar radiation, said control system can open an electrical connection between the solar control unit and the ignition relay to turn on said heat generator.

Consequently, even if a heat generator has been programmed to be turned off for a predetermined time period, said heat generator can continue to be turned off for a period of time greater than said predetermined time period.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. Control system (1) for controlling an electrical connection (C) between a solar control unit (6) and means for heating sanitary water, in particular a boiler, said control system comprising:
- at least one photovoltaic module (2) configured for capturing an amount of solar radiation and generating an output voltage (V_{M}),
- a switching circuit (31) comprising a relay (30),
**characterized in that**
said means is an ignition relay to turn on a heat generator (9) and said control system comprises:
- a control unit (3), connected to said at least one photovoltaic module (2), configured to control the opening of said electrical connection (C) between said solar control unit (6) and said ignition relay (5), and where said control unit (3) comprises said switching circuit (31), where said relay (30) is a control relay (30) for controlling the opening of said electrical connection (C), and where said switching circuit (31) is configured to switch the state of said control relay (30) according to a voltage depending on the intensity of the amount of solar radiation captured by said photovoltaic module (2).

2. Control system (1) according to the preceding claim, **characterized in that** it comprises a time switch (4) programmed to enable said heat generator (9) to be turned on/off at predetermined times, where said time switch has an input for being connected to said solar control unit (6) and an output connected to said control unit (3), and **in that** said control unit (3) is configured to switch the state of said control relay (30) regardless of whether said time switch (4) is programmed in such a way that said heat generator (9) is turned on.

3. Control system (1) according to claim 1 or 2, **characterized in that** said switching circuit (31) comprises:
- an operational amplifier (28), where said operational amplifier (28) has a first input for receiving a first voltage or reference voltage (V_{RIF}), and a second input for receiving a second voltage (V_{I}), where said second voltage (V_{I}) is said voltage depending on the intensity of solar radiation captured by said photovoltaic module (2), and an output, and
- a transistor (29), where said transistor (29) has a base connected to the output of said operational amplifier (28) by means of a third transistor (R3), and a collector connected to said control relay (30);
where said second voltage (V_{I}) is given by the algebraic sum of a third voltage corresponding to the output voltage (V_{M}) of said photovoltaic module (2) and a fourth voltage (V_{R}) across a first resistor (R1), connected in parallel to said photovoltaic module (2), said first resistor (R1) having a resistance value chosen so that, when the intensity of solar radiation has a value equal to 1000 W/m² said second voltage (V_{I}) is between 6 V and 7 V, and when the intensity of solar radiation has a value of 50 W/m² said second voltage (V_{I}) is between 1 V and 2 V.

4. Control system (1) according to the preceding claim, **characterized in that** said control relay (30) comprises a coil (300), a first fixed contact (301), a second fixed contact (302) and a first movable contact (303), arranged between said first fixed contact and said second fixed contact, where said first movable contact is able to move from a first position, in which it is connected with said first fixed contact (301), to a second position, in which it is connected with said second fixed contact (302), and vice versa;
where said control relay (30) is configured in such a way that, when an output voltage (Vₒ) of said operational amplifier (28) is such as to bring into conduction said transistor (29), said coil (300) is excited by the passage of electric current and said first movable contact (303) passes from said first position to said second position, so as to open said electrical connection (C) between said solar control unit (6) and said ignition relay (5).

5. Control system (1) according to the preceding claim, **characterized in that** said first voltage (V_{RIF}) is a variable voltage; said switching circuit (31) comprising a trimmer (27) to vary said first voltage (V_{RIF}).

6. Control system (1) according to the preceding claim, **characterized in that** said trimmer (27) is a resistive trimmer.

7. Control system (1) according to any one of the preceding claims, **characterized in that** said switching circuit (31) comprises a first light source (S1) for indicating whether said electrical connection (C) between said solar control unit (6) and said ignition relay (5) is open or closed; said first light source (S1) being connected to said control relay (30) via a fourth resistor (R4).

8. Control system (1) according to any one of the preceding claims, **characterized in that** said switching circuit (31) comprises a power supply unit (UA) and that it comprises a second light source (S2) to indicate whether said circuit switching (31) is powered by said power supply unit (UA); said second light source (S2) being connected to said power supply unit (UA) via a fifth resistor (R5).

9. Control system (1) according to any one of the preceding claims, **characterized in that** it comprises bypass means (MB) to bypass said control unit (3) and said time switch (4), in case of malfunction of said control unit (3) and/or of said time switch (4); where said bypass means (MB) have an input for receiving a signal from said solar control unit (6) and an output for providing a signal to said ignition relay (5).

10. Solar control unit (6) comprising inside an ignition relay (5) to turn on a heat generator for heating sanitary water, in particular a boiler, and a control system according to any one of the preceding claims.

## Patentansprüche

1. Steuersystem (1) zum Steuern einer elektrischen Verbindung (C) zwischen einer Solarsteuereinheit (6) und einem Mittel zum Erwärmen von Sanitärwasser, insbesondere eines Kessels, wobei das Steuerungssystem umfasst:
- mindestens ein Photovoltaikmodul (2), das konfiguriert ist, um eine Menge an Sonnenstrahlung zu erfassen und eine Ausgangsspannung (V_{M}) zu erzeugen,
- eine Schaltschaltung (31), die ein Relais (30) umfasst,
**dadurch gekennzeichnet, dass** das Mittel ein Zündrelais ist, um einen Wärmeerzeuger (9) einzuschalten, und das Steuersystem umfasst:
- eine Steuereinheit (3), die mit dem mindestens einen Photovoltaikmodul (2) verbunden ist und konfiguriert ist, um die Öffnung der elektrischen Verbindung (C) zwischen der Solarsteuereinheit (6) und dem Zündrelais (5) zu steuern, und wobei die Steuereinheit (3) die Schaltschaltung (31) umfasst, wobei das Relais (30) ein Steuerrelais (30) zum Steuern der Öffnung der elektrischen Verbindung (C) ist, und wobei die Schaltschaltung (31) konfiguriert ist, um den Zustand des Steuerrelais (30) gemäß einer Spannung zu schalten, die von der Intensität der Menge der von dem Photovoltaikmodul (2) erfassten Sonnenstrahlung abhängt.

2. Steuersystem (1) nach dem vorstehenden Anspruch, **dadurch gekennzeichnet, dass** es einen Zeitschalter (4) umfasst, der programmiert ist, um das Ein- und Ausschalten des Wärmeerzeugers (9) zu vorbestimmten Zeiten zu ermöglichen, wobei der Zeitschalter einen Eingang zum Verbinden mit der Solarsteuereinheit (6) und einen Ausgang zum Verbinden mit der Steuereinheit (3) aufweist, und dass die Steuereinheit (3) konfiguriert ist, um den Zustand des Steuerrelais (30) zu schalten, unabhängig davon, ob der Zeitschalter (4) so programmiert ist, dass der Wärmeerzeuger (9) eingeschaltet ist.

3. Steuersystem (1) nach Anspruch 1 oder 2, **dadurch gekennzeichnet, dass** die Schaltschaltung (31) umfasst:
- einen Operationsverstärker (28), wobei der Operationsverstärker (28) einen ersten Eingang zum Empfangen einer ersten Spannung oder Referenzspannung (V_{RIF}) und einen zweiten Eingang zum Empfangen einer zweiten Spannung (V_{I}) aufweist, wobei die zweite Spannung (V_{I}) die Spannung in Abhängigkeit von der Intensität der durch das Photovoltaikmodul (2) erfassten Sonnenstrahlung ist, und einen Ausgang und
- einen Transistor (29), wobei der Transistor (29) eine Basis aufweist, die über das Mittel eines dritten Transistor (R3) mit dem Ausgang des Operationsverstärkers (28) verbunden ist, und einen mit dem Steuerrelais (30) verbundenen Kollektor;
wobei die zweite Spannung (V_{I}) durch die algebraische Summe einer dritten Spannung, die der Ausgangsspannung (V_{M}) des Photovoltaikmoduls (2) entspricht, und einer vierten Spannung (V_{R}) über einen ersten Widerstand (R1) gegeben ist, der parallel zu dem Photovoltaikmodul (2) geschaltet ist, der erste Widerstand (R1) einen Widerstandswert aufweist, der so gewählt ist, dass, wenn die Intensität der Sonnenstrahlung einen Wert gleich 1000 W/m² hat, die zweite Spannung (V_{I}) zwischen 6 V und 7 V liegt, und wenn die Intensität der Sonnenstrahlung einen Wert von 50 W/m² hat, die zweite Spannung (V_{I}) zwischen 1 V und 2 V liegt.

4. Steuersystem (1) nach dem vorstehenden Anspruch, **dadurch gekennzeichnet, dass** das Steuerrelais (30) eine Spule (300), einen ersten festen Kontakt (301), einen zweiten festen Kontakt (302) und einen ersten beweglichen Kontakt (303) umfasst, der zwischen dem ersten festen Kontakt und dem zweiten festen Kontakt angeordnet ist,
wobei sich der erste bewegliche Kontakt von einer ersten Position, in der er mit dem ersten festen Kontakt (301) verbunden ist, in eine zweite Position, in der er mit dem zweiten festen Kontakt (302) verbunden ist, und umgekehrt bewegen kann;
wobei das Steuerrelais (30) so konfiguriert ist, dass, wenn eine Ausgangsspannung (Vₒ) des Operationsverstärkers (28) den Transistor (29) in Betrieb nimmt, die Spule (300) durch den Durchgang von elektrischem Strom angeregt wird und der erste bewegliche Kontakt (303) von der ersten Position in die zweite Position übergeht, um die elektrische Verbindung (C) zwischen der Solarsteuereinheit (6) und dem Zündrelais (5) zu öffnen.

5. Steuersystem (1) nach dem vorstehenden Anspruch, **dadurch gekennzeichnet, dass** die erste Spannung (V_{RIF}) eine variable Spannung ist; wobei die Schaltschaltung (31) einen Trimmer (27) zum Variieren der ersten Spannung (V_{RIF}) umfasst.

6. Steuersystem (1) nach dem vorstehenden Anspruch, **dadurch gekennzeichnet, dass** der Trimmer (27) ein resistiver Trimmer ist.

7. Steuersystem (1) nach einem der vorstehenden Ansprüche, **dadurch gekennzeichnet, dass** die Schaltschaltung (31) eine erste Lichtquelle (S1) zum Anzeigen, ob die elektrische Verbindung (C) zwischen der Solarsteuereinheit (6) und dem Zündrelais (5) offen oder geschlossen ist, umfasst; die erste Lichtquelle (S1) über einen vierten Widerstand (R4) mit dem Steuerrelais (30) verbunden ist.

8. Steuersystem (1) nach einem der vorstehenden Ansprüche, **dadurch gekennzeichnet, dass** die Schaltschaltung (31) eine Stromversorgungseinheit (UA) umfasst und dass sie eine zweite Lichtquelle (S2) umfasst, um anzuzeigen, ob die Schaltschaltung (31) von der Stromversorgungseinheit (UA) gespeist wird; die zweite Lichtquelle (S2) über einen fünften Widerstand (R5) mit der Stromversorgungseinheit (UA) verbunden ist.

9. Steuersystem (1) nach einem der vorstehenden Ansprüche, **dadurch gekennzeichnet, dass** es ein Bypassmittel (MB) umfasst, um die Steuereinheit (3) und die Schaltuhr (4) im Falle einer Fehlfunktion der Steuereinheit (3) und/oder der Schaltuhr (4) zu umgehen; wobei das Bypassmittel (MB) einen Eingang zum Empfangen eines Signals von der Solarsteuereinheit (6) und einen Ausgang zum Bereitstellen eines Signals an das Zündrelais (5) aufweist.

10. Solar-Steuereinheit (6), umfassend innerhalb ein Zündrelais (5) zum Einschalten eines Wärmeerzeugers zum Erwärmen von Sanitärwasser, insbesondere eines Kessels, und ein Steuersystem nach einem der vorstehenden Ansprüche.

## Revendications

1. Système de commande (1) pour commander une connexion électrique (C) entre une unité de commande solaire (6) et des moyens pour chauffer de l'eau sanitaire, en particulier une chaudière, ledit système de commande comprenant :
- au moins un module photovoltaïque (2) configuré pour capturer une quantité de rayonnement solaire et générer une tension de sortie (V_{M}),
- un circuit de commutation (31) comprenant un relais (30),
**caractérisé en ce que**
lesdits moyens sont un relais d'allumage pour mettre un générateur de chaleur (9) en marche et ledit système de commande comprend :
- une unité de commande (3), connectée audit au moins un module photovoltaïque (2), configurée pour commander l'ouverture de ladite connexion électrique (C) entre ladite unité de commande solaire (6) et ledit relais d'allumage (5), et où ladite unité de commande (3) comprend ledit circuit de commutation (31), où ledit relais (30) est un relais de commande (30) pour commander l'ouverture de ladite connexion électrique (C) et où ledit circuit de commutation (31) est configuré pour commuter l'état dudit relais de commande (30) selon une tension dépendant de l'intensité de la quantité de rayonnement solaire capturée par ledit module photovoltaïque (2).

2. Système de commande (1) selon la revendication précédente, **caractérisé en ce qu'**il comprend une minuterie (4) programmée pour permettre audit générateur de chaleur (9) d'être mis en marche/arrêt à des moments prédéterminés, où ladite minuterie présente une entrée pour être connectée à ladite unité de commande solaire (6) et une sortie connectée à ladite unité de commande (3), et **en ce que** ladite unité de commande (3) est configurée pour commuter l'état dudit relais de commande (30) indépendamment du fait que ladite minuterie (4) soit programmée ou non de façon à ce que ledit générateur de chaleur (9) soit mis en marche.

3. Système de commande (1) selon la revendication 1 ou 2, **caractérisé en ce que** ledit circuit de commutation (31) comprend :
- un amplificateur opérationnel (28), où ledit amplificateur opérationnel (28) présente une première entrée pour recevoir une première tension ou tension de référence (V_{RIF}), et une seconde entrée pour recevoir une seconde tension (V_{I}), où ladite seconde tension (V_{I}) est ladite tension dépendant de l'intensité du rayonnement solaire capturé par ledit module photovoltaïque (2), et une sortie, et
un transistor (29), où ledit transistor (29) a une base connectée à la sortie dudit amplificateur opérationnel (28) au moyen d'un troisième transistor (R3), et un collecteur connecté audit relais de commande (30) ;
où ladite seconde tension (V_{I}) est donnée par la somme algébrique d'une troisième tension correspondant à la tension de sortie (V_{M}) dudit module photovoltaïque (2) et d'une quatrième tension (V_{R}) aux bornes d'une première résistance (R1), connectée en parallèle audit module photovoltaïque (2), ladite première résistance (R1) ayant une valeur de résistance choisie de façon à ce que, lorsque l'intensité du rayonnement solaire a une valeur égale à 1000 W/m², ladite seconde tension (V_{I}) soit comprise entre 6V et 7 V, et lorsque l'intensité du rayonnement solaire a une valeur de 50 W/m², ladite seconde tension (V_{I}) soit comprise entre 1V et 2V

4. Système de commande (1) selon la revendication précédente, **caractérisé en ce que** ledit relais de commande (30) comprend une bobine (300), un premier contact fixe (301), un second contact fixe (302) et un premier contact amovible (303), agencé entre ledit premier contact fixe et ledit second contact fixe,
où ledit premier contact amovible peut se déplacer d'une première position, dans laquelle il est connecté audit premier contact fixe (301), à une seconde position dans laquelle il est connecté audit second contact fixe (302), et inversement ;
où ledit relais de commande (30) est configuré de telle façon que, lorsqu'une tension de sortie (Vₒ) dudit amplificateur opérationnel (28) est de nature à mettre ledit transistor (29) à l'état passant, ladite bobine (300) soit excitée par le passage du courant électrique et ledit premier contact amovible (303) passe de ladite première position à ladite seconde position, de façon à ouvrir ladite connexion électrique (C) entre ladite unité de commande solaire (6) et ledit relais d'allumage (5).

5. Système de commande (1) selon la revendication précédente, **caractérisé en ce que** ladite première tension (V_{RIF}) est une tension variable ; ledit circuit de commutation (31) comprenant un potentiomètre de réglage (27) pour modifier ladite première tension (V_{RIF}).

6. Système de commande (1) selon la revendication précédente, **caractérisé en ce que** ledit potentiomètre de réglage (27) est un potentiomètre de réglage résistif.

7. Système de commande (1) selon l'une quelconque des revendications précédentes, **caractérisé en ce que** ledit circuit de commutation (31) comprend une première source lumineuse (S1) pour indiquer si ladite connexion électrique (C) entre ladite unité de commande solaire (6) et ledit relais d'allumage (5) est ouverte ou fermée ; ladite première source lumineuse (S1) étant connectée audit relais de commande (30) via une quatrième résistance (R4).

8. Système de commande (1) selon l'une quelconque des revendications précédentes, **caractérisé en ce que** ledit circuit de commutation (31) comprend une unité d'alimentation électrique (UA) et **en ce qu'**il comprend une seconde source lumineuse (S2) pour indiquer si ledit circuit de commutation (31) est alimenté par ladite unité d'alimentation électrique (UA) ; ladite seconde source lumineuse (S2) étant connectée à ladite unité d'alimentation électrique (UA) via une cinquième résistance (R5).

9. Système de commande (1) selon l'une quelconque des revendications précédentes, **caractérisé en ce qu'**il comprend des moyens de dérivation (MB) pour contourner ladite unité de commande (3) et ladite minuterie (4), en cas de dysfonctionnement de ladite unité de commande (3) et/ou de ladite minuterie (4) ; où lesdits moyens de dérivation (MB) ont une entrée pour recevoir un signal provenant de ladite unité de commande solaire (6) et une sortie pour délivrer un signal audit relais d'allumage (5).

10. Unité de commande solaire (6) comprenant à l'intérieur un relais d'allumage (5) pour mettre en marche un générateur de chaleur pour chauffer de l'eau sanitaire, en particulier une chaudière, et un système de commande selon l'une quelconque des revendications précédentes.
